Europäisches Patentamt

European Patent Office

Office européen des brevets

(19)

(11) Numéro de publication: **0 111 441**
**A1**

(12) **DEMANDE DE BREVET EUROPEEN**

(21) Numéro de dépôt: 83810505.4

(22) Date de dépôt: 03.11.83

(51) Int. Cl.³: **G 01 N 21/41**

(30) Priorité: 15.11.82 CH 6648/82

(43) Date de publication de la demande:
20.06.84 Bulletin 84/25

(84) Etats contractants désignés:
AT BE CH DE FR GB IT LI LU NL SE

(71) Demandeur: PROMOGAP
15, boulevard Helvétique
CH-1207 Geneve(CH)

(72) Inventeur: Benoit, Pierre
14, chemin de la Combe
CH-1249 Athenaz(CH)

(74) Mandataire: Nithardt, Roland
CABINET MOSER & CIE 76, Rue de Lausanne
CH-1202 Genève(CH)

(54) **Appareil de mesure de l'indice de réfraction d'une fibre optique.**

(57) L'appareil décrit comporte essentiellement une cuve (10) comportant une fenêtre horizontale transparente (11) et contenant un liquide adaptateur d'indice (12). Une fibre optique (13) est montée dans cette cuve perpendiculairement à la fenêtre (11). On injecte une lumière (14), focalisée par un condenseur (15) sur la fibre (13). On élimine le cône de lumière d'angle d'ouverture $(2\beta)$ correspondant aux modes conduits et de fuite à l'aide d'un miroir annulaire (16) qui réfléchit la partie restante du cône de lumière d'ouverture $(2\alpha)$ s'échappant latéralement de la fibre. Cette lumière réfléchie par le miroir (16) est focalisée par un condenseur annulaire (18) et renvoyée par un miroir plan (19) percé en son centre sur un détecteur (20). La mesure de la quantité de lumière reçue par le détecteur (20) permet de déterminer l'indice de réfraction de la fibre.

EP 0 111 441 A1

./...

FIG. I

# APPAREIL DE MESURE DE L'INDICE DE REFRACTION D'UNE FIBRE OPTIQUE

La présente invention concerne un appareil de mesure de l'indice de réfraction d'une fibre optique par la méthode, dite "méthode en champ proche réfracté".

On connait de nombreuses méthodes de mesure de l'indice de réfraction d'une fibre optique ou d'une préforme, notamment celles décrites dans le manuel : " Principles of optical fiber measurement " de Dietrich Marcuse publié en 1981 par Academic Press. A titre d'exemple, citons les méthodes transversales applicables aux préformes et aux fibres qui impliquent une rotation de la fibre ou de la préforme si l'on veut déterminer leur géométrie (excentricité, ellipticité, diamètre etc..).

Mentionnons également les méthodes interférométriques qui ne peuvent être utilisées en milieu industriel en raison du temps de préparation de l'échantillon, des conditions de propreté requises etc..

La méthode dite du champ proche est fréquemment utilisée. Toutefois, on ne peut éliminer les modes de fuite et la mesure doit être corrigée au moyen de formules approximatives.

Un autre procédé de mesure bien connu est la méthode dite : "par réflexion de Fresnel" qui permet d'atteindre une résolution élevée, mais aboutit fréquemment à des erreurs de mesure dues à sa sensibilité aux contaminations de la surface mesurée de la fibre.

Tous ces procédés bien connus nécessitant souvent un appareillage complexe, une main-d'oeuvre qualifiée et une préparation compliquée et soignée de la fibre à analyser peuvent selon le cas être utilisés dans des laboratoires, mais ne se prêtent pas à une utilisation dans l'industrie où les exigences et les conditions de travail sont totalement différentes. Pour une application industrielle, l'appareil doit permettre une lecture directe de la valeur de la grandeur mesurée, une préparation et une mise en place simples et rapides de la fibre à analyser, ces opérations devant pouvoir être effectuées par une personne moyennement qualifiée.

La présente invention se propose de remplir cette lacune en réalisant un appareil de mesure de l'indice de réfraction d'une fibre optique multimode ou monomode répondant aux conditions définies ci-dessus correspondant à une utilisation industrielle. La méthode mise en oeuvre par cet appareil est la méthode dite "méthode en champ proche réfracté" qui est également décrite dans le manuel précité aux pages 132 à 141. Selon ce procédé, on injecte de la lumière à une extrémité d'une fibre multimode ou monomode, et l'on mesure la quantité de lumière qui s'échappe latéralement de cette fibre et qui correspond aux modes réfractés. Le cône de lumière ainsi obtenu est filtré au moyen d'un écran annulaire, ce qui permet d'éliminer les modes conduits et les modes de fuite. La mesure directe, après calibrage, permet une détermination de l'indice de réfraction de la fibre au 1/1000 ème avec une incertitude de 0,0001 sur la valeur de cet indice et une résolution spatiale de 0,1 à 0,5 µm.

Jusqu'à présent, le dispositif utilisé se composait d'une cuve de liquide adaptateur d'indice dans laquelle était immergé un tronçon d'extrémité de la fibre à analyser, disposé sensiblement horizontalement, d'un objectif de microscope agencé pour injecter de la lumière dans cette fibre, d'un écran suivi d'une optique focalisant la lumière à mesurer sur un détecteur disposé de l'autre côté de la cuve par rapport à l'objectif du microscope. Un des principaux inconvénients de ce montage est qu'il nécessitait un guidage du tronçon d'extrémité de la fibre, ce guidage étant prévu pour permettre à la fibre de traverser la paroi latérale de la cuve. A cet effet, on utilisait fréquemment un guide tubulaire, tel que par exemple une aiguille hypodermique plantée dans une paroi latérale de la cuve et servant à retenir la fibre dans sa position de mesure. Un des problèmes posés par ce montage était bien entendu celui de l'étanchéité de la cuve à l'endroit du passage de la fibre dans la paroi latérale. Un autre problème est celui de la reproductibilité du positionnement de la fibre relativement au point focal de l'optique d'injection. En outre, un tel montage relativement précaire n'est utilisable qu'en laboratoire moyennant un certain nombre de précautions pour assurer la propreté de la fibre et éviter la pollution de la cuve et du liquide qu'elle contient, et ne se prête pas à un usage industriel.

La présente invention se propose de pallier cet inconvénient en réalisant un appareil à lecture directe permettant une mesure efficace et rapide de l'indice de réfraction d'une fibre monomode ou multimode.

Dans ce but, l'appareil selon l'invention est caractérisé en ce qu'il comporte un châssis rigide portant une cuve mobile selon trois axes orthogonaux, contenant un liquide adaptateur d'indice, et dont le fond comporte une fenêtre horizontale transparente, un support disposé au-dessus de la cuve et agencé pour supporter un tronçon d'extrémité de la fibre optique à analyser perpendiculairement à la fenêtre transparente, une source lumineuse et un premier dispositif optique pour injecter un faisceau lumineux dans l'axe optique de la fibre par son extrémité disposée en regard de la fenêtre transparente, un écran circulaire disposé au-dessus de la cuve pour éliminer le cône lumineux formé par les modes conduits et ceux de fuite, et un détecteur pour intercepter la partie restantes des modes réfractés du cône de lumière s'échappant latéralement de la fibre.

La présente invention sera mieux comprise en référence à la description d'une exemple de réalisation préférée et du dessin annexé dans lequel :

La figure 1 représente une vue schématique de l'appareil selon l'invention destiné à mettre en oeuvre la méthode en champ proche réfracté pour la mesure de l'indice de réfraction d'une fibre optique,

La figure 2 représente une vue en coupe axiale d'une construction préférée de l'appareil selon l'invention,

La figure 3 représente une courbe de variation de l'intensité lorsque le faisceau ne présente pas une répartition d'intensité constante,

La figure 4 illustre un schéma de montage d'un cache disposé dans le faisceau parallèle,

La figure 5 est une vue en plan illustrant les positions relatives du détecteur avec son trou central et de la zone d'ombre engendrée par le cache, et

La figure 6 représente la courbe de variation de l'intensité pour un montage correspondant à celui de la fig. 4.

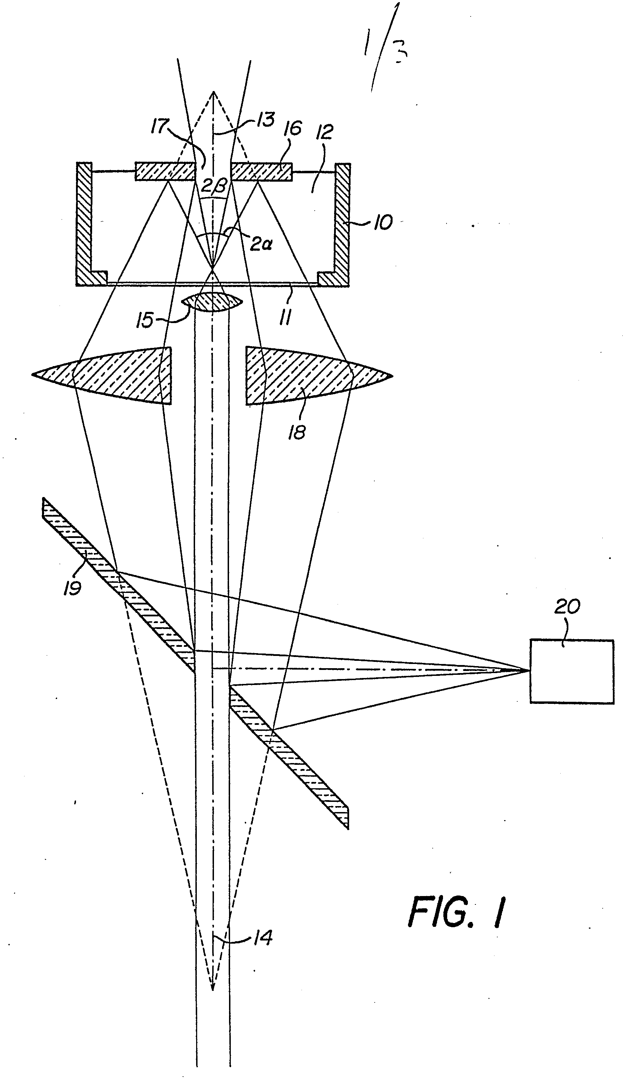

En référence à la fig. 1, l'appareil décrit se compose d'une cuve 10 dont le fond est équipé d'une fenêtre transparente 11, et qui est remplie d'un liquide adaptateur d'indice 12. Une fibre optique 13, dont on veut mesurer l'indice de réfraction, est fixée au moyen d'un support non représenté, au centre de la cuve selon une direction sensiblement perpendiculaire à la fenêtre 11 placée dans un plan horizontal.

On injecte de la lumière dans la fibre 13 au moyen d'un faisceau de lumière 14 focalisé par un système optique convergent 15 disposé sous la fenêtre 11. Le cône de lumière d'ouverture $2\alpha$ qui s'échappe latéralement de la fibre est partiellement intercepté par un réflecteur annulaire 16 et, le cas échéant, par la paroi latérale réfléchissante de la cuve 10 et traverse partiellement l'ouverture centrale 17 de ce réflecteur. En fait, le cône de lumière se compose d'un cône central d'angle d'ouverture $2\beta$ qui s'échappe au travers de l'ouverture 17 et qui correspond au moins aux modes conduits et ceux de fuite que l'on souhaite éliminer dans l'application de la méthode susmentionnée, et de la partie du cône d'ouverture $2\alpha$ restant après l'élimination du cône central d'ouverture $2\beta$ . Cette lumière restante est réfléchie par le réflecteur 16, focalisée par un condenseur annulaire 18 et renvoyée par un miroir plan 19 sur un détecteur 20. Comme mentionné précédemment, la mesure de cette quantité de lumière permet d'une manière connue en soi, de déterminer l'indice de réfraction de la fibre optique 13.

Ce montage schématique illustre les principes de fonctionnement de l'appareil selon l'invention. Il est bien entendu possible de modifier ce montage, par exemple en supprimant le réflecteur 16 et en le remplaçant par un détecteur de forme annulaire qui mesure directement la quantité de lumière correspondant à la partie restante du cône de lumière d'angle $2\alpha$ , lorsque la partie centrale relative aux modes conduits et à ceux de fuite a été filtrée par l'ouverture centrale circulaire du détecteur. Une autre possibilité consiste à remplacer l'ouverture centrale par un écran circulaire dont le but est d'éliminer au moins les modes conduits et les modes de fuite. Dans ces différents cas, le diamètre de l'ouverture centrale ou celui de l'écran est au moins suffisant pour assurer l'élimination totale des modes conduits et des modes de fuite, c'est-à-dire au moins égal au diamètre du cercle d'intersection du cône formé par les modes conduits et les modes de fuite avec le plan du détecteur ou du réflecteur et/ou de l'écran.

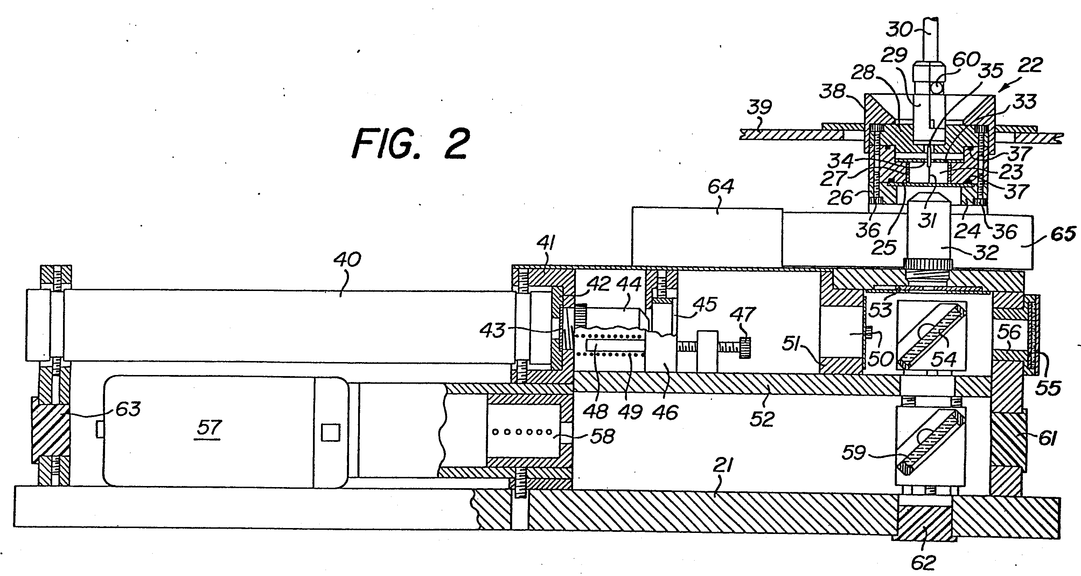

La fig. 2 illustre le mode de réalisation préféré de l'appareil représenté schématiquement par la fig.1. Cet appareil se compose essentiellement d'un bâti 21 sur lequel sont montés les différents éléments décrits en référence à la fig. 1. Tout d'abord la cellule de mesure 22 comporte une cuve 23 remplie d'un liquide adaptateur d'indice, et formée essentiellement d'un bloc de base 24 servant de support à une fenêtre transparente 25 qui constitue le fond de la cuve, d'un bloc 26 constituant les parois latérales de la cuve 23 ou du moins servant de support à une chemise cylindrique 27 qui définit les parois latérales de cette cuve, et d'un bloc supérieur 28 servant de couvercle à la cellule de mesure 22. Les parois latérales du bloc 26 ou de la chemise 27 peuvent être réfléchissantes pour permettre l'emploi d'une optique d'injection à très grande ouverture. Le bloc supérieur 28 porte un support 29 prévu pour assurer le montage et le maintien en position d'un câble optique 30 dont l'extrémité dénudée 31 se trouve à l'intérieur de la cuve 23 et est disposée sur l'axe vertical définissant l'axe optique d'un objectif 32, destiné à injecter de la lumière dans la fibre, et disposé sous la fenêtre 25. Un détecteur de forme annulaire 33 recouvre la cuve 23, ou plus exactement est immergé à l'intérieur de cette cuve, en reposant sur un épaulement annulaire ménagé dans le bloc central 26. Ce détecteur comporte une ouverture centrale 34 dont le diamètre correspond à l'intersection du plan de ce détecteur avec le cône de lumière correspondant aux modes de fuite (d'angle d'ouverture $2\beta$ dans le dispositif de la fig. 1). Le diamètre de cette ouverture est suffisant pour permettre le passage de la fibre et de son éventuel support. Cette ouverture peut également jouer le rôle de l'écran utilisé dans la mise en oeuvre classique de la méthode décrite précédemment. Un support tubulaire 35 pour guider et retenir en position l'extrémité dénudée 31 de la fibre optique du câble 30 est engagé à travers ladite ouverture centrale 34 du détecteur 33.

Les trois blocs 24, 26 et 28 servant de supports à la cuve 23, sont assemblés au moyen de boulons de serrage 36. L'étanchéité entre ces blocs est assurée par des joints annulaires 37. Un capuchon de protection 38 est monté à l'extrémité supérieure de la cellule de mesure 22. Un capot 39 (partiellement représenté) recouvre et protège les composants essentiels de l'appareil représenté.

La source de lumière est constituée dans cette forme de réalisation particulière par un laser 40 monté sur une plaque support 41, contre une entretoise 42 de forme annulaire. Une lame quart d'onde 43 et un objectif 44 sont fixés au support 41 à l'avant du laser 40. Une plaque 45 portant une ouverture ponctuelle centrale est disposée à l'avant de l'objectif et est montée, d'une façon connue en soi, sur un support 46 réglable en position. Pour permettre ce réglage, le support 46 comporte une vis de réglage 47 et deux tiges axiales 48 coopérant avec deux ressorts hélicoïdaux 49 engagés sur ces tiges. Une optique 50 de sortie du filtre spatial est montée sur une potence 51 fixée au support 52 portant la source de lumière et ses différents composants annexes.

A l'intersection des axes optiques respectifs du laser 40 et de l'objectif 32 pourvu d'un diaphragme réglable 53, est prévu un organe semi-réfléchissant 54, disposé à 45° par rapport aux deux axes optiques mentionnés, cet organe semi-réfléchissant pouvant être un miroir séparateur ou de préférence un miroir sélectif du type miroir laser. Ce miroir a pour but de réfléchir environ 99 % du faisceau laser incident à travers l'objectif 32 sur l'extrémité de la fibre 31 et de transmettre environ 1 % de lumière non réfléchie sur un détecteur de référence 55 disposé au moins approximativement sur l'axe optique. Ce détecteur a pour but de contrôler la stabilité de la source de lumière. Il est de préférence monté sur un support tubulaire 56 logé dans un alésage approprié ménagé dans le bâti.

Pour permettre un contrôle plus efficace du fonctionnement de l'appareil, celui-ci comporte de préférence une caméra de télévision 57 montée sur le bâti et équipée d'un objectif 58. L'axe optique de cet objectif est sensiblement parallèle à l'axe optique du laser et de son système optique associé. Un miroir 59 incliné à 45° par rapport à l'horizontale est placé à l'intersection des axes optiques de l'objectif de prises de vues 58 et de l'objectif 32. Pour visualiser la fibre, le support 29 du câble optique 30 est équipé d'un dispositif 60 permettant d'injecter latéralement de la lumière, par exemple une lumière bleue de longueur d'onde différente de celle du faisceau laser, dans la fibre optique. Cette lumière émise par l'extrémité de la fibre optique est transmise par le miroir sélectif 54 et réfléchie par le miroir 59 sur l'objectif de prises de vues 58 de la caméra de télévision 57.

Pour permettre le réglage du dispositif, des bouchons 61, 62 et 63 sont disposés sur le trajet des rayons lumineux et sont logés dans des cavités appropriées ménagées dans le bâti.

Les blocs 64 et 65 représentent des unités motorisées, comprenant des micromoteurs (non représentés) assurant le déplacement commandé de la cellule de mesure 22 selon les axes X, Y et Z du repère orthogonal mentionné précédemment.

L'appareil décrit ci-dessus permet de déterminer par un balayage dans le plan X, Y du profil d'indice d'une fibre optique, sa géométrie et notamment son excentricité avec une résolution spatiale de l'ordre de 0,1 à 0,5 μm. Il présente en outre l'avantage de permettre la détermination des caractéristiques de fibres monomodes.

Il est bien entendu que différents éléments optiques considérés comme classiques dans ce montage pourraient être remplacés par des éléments optiques équivalents. A titre d'exemple, le miroir plan 16 et le condenseur annulaire 18 illustrés par la fig. 1 pourraient être remplacés par un réflecteur annulaire concave agencé pour focaliser les faisceaux réfléchis sur le détecteur 20.

Dans ces réalisations, l'ouverture centrale qui joue le rôle d'écran interposé dans le faisceau lumineux pour éliminer le cône de lumière composé des modes conduits et des modes de fuite, se déplace latéralement par rapport au faisceau, lorsque ce détecteur se déplace. Si le faisceau ne présente pas une répartition d'intensité constante, le niveau de l'intensité détectée varie selon une courbe représentée par la

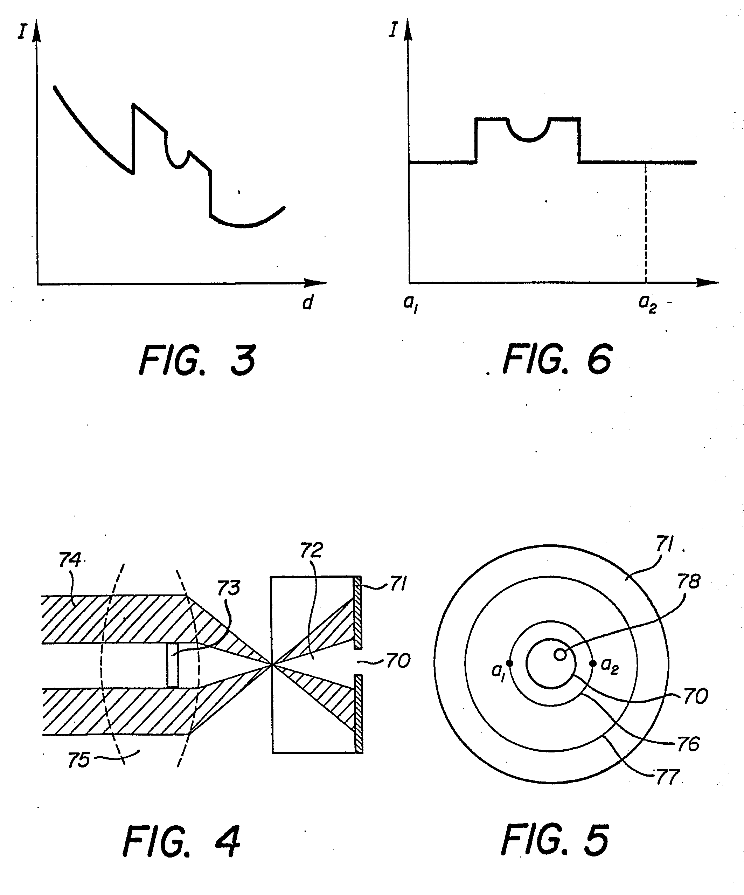

fig. 3 où l'intensité I est portée en ordonnées et le déplacement latéral d du détecteur par rapport à l'axe du faisceau est porté en abscisses.

Pour remédier à cet inconvénient, on propose de monter un cache central dans le faisceau parallèle, ce cache étant conçu de telle manière que son ombre portée couvre entièrement l'ouverture centrale du détecteur. Le diamètre de la zone d'ombre est de préférence supérieur au diamètre de l'ouverture du détecteur.

La fig. 4 illustre schématiquement la position préférée du cache monté dans l'objectif pour des raisons de centrage, et positionné dans le faisceau parallèle pour des raisons de construction. L'ouverture centrale 70 du détecteur 71 a un diamètre inférieur à la plage d'ombre portée par le cône d'ombre 72 engendré par le cache circulaire 73 disposé dans le faisceau parallèle 74 et monté dans l'objectif microscopique 75.

La fig. 5 est une vue en plan illustrant les positions relatives du détecteur 71 du trou central 70 de ce détecteur, de la zone d'ombre portée 76, de la plage lumineuse 77 et du trou de passage 78 de la fibre optique.

Comme le montre plus particulièrement la fig. 6, l'intensité lumineuse dans la zone de mesure définie par le segment $a_1a_2$ varie selon le graphique représenté. Le niveau de cette intensité reste constant comme cela est le cas pour les systèmes classiques dans lesquels l'écran de collection-détection est fixe par rapport au faisceau.

REVENDICATIONS

1. Appareil de mesure de l'indice de réfraction d'une fibre optique par la méthode dite "méthode en champ proche réfracté", caractérisé en ce qu'il comporte un châssis rigide portant une cuve mobile selon trois axes orthogonaux contenant un liquide adaptateur d'indice et dont le fond comporte une fenêtre horizontale transparente, un support disposé au-dessus de la cuve et agencé pour supporter un tronçon d'extrémité de la fibre optique à analyser, perpendiculairement à la fenêtre transparente, une source lumineuse et un premier dispositif optique pour injecter un faisceau lumineux dans l'axe optique de la fibre par son extrémité disposée en regard de la fenêtre transparente, un écran circulaire disposé au-dessus de la cuve pour éliminer le cône lumineux formé par les modes conduits et ceux de fuite, et un détecteur pour intercepter la partie restante des modes réfractés du cône de lumière s'échappant latéralement de la fibre.

2. Appareil selon la revendication 1, caractérisé en ce que le détecteur est annulaire et est disposé sensiblement coaxialement par rapport à l'écran circulaire.

3. Appareil selon la revendication 2, caractérisé en ce que le détecteur annulaire et l'écran circulaire sont disposés coaxialement dans un même plan au-dessus de la cuve et autour du support du tronçon d'extrémité de la fibre optique.

4. Appareil selon la revendication 3, caractérisé en ce que le diamètre de l'ouverture circulaire centrale du détecteur annulaire est au moins égal au diamètre d'un écran fictif interceptant le cône de lumière s'échappant latéralement de la fibre et destiné à éliminer les modes conduits et les modes de fuite.

5. Appareil selon la revendication 1, caractérisé en ce qu'il comporte un organe réflecteur annulaire disposé au-dessus de la cuve coaxialement au support du tronçon d'extrémité de la fibre, et agencé pour réfléchir la partie du cône de lumière s'échappant latéralement de la fibre lorsque les modes conduits et de fuite sont éliminés, et un second dispositif optique pour condenser cette lumière sur un détecteur.

6. Appareil selon la revendication 5, caractérisé en ce que le second dispositif optique comporte une lentille convergente annulaire disposée coaxialement par rapport à l'axe du support du tronçon d'extrémité de la fibre.

7. Appareil selon la revendication 5, caractérisé en ce que l'organe réflecteur annulaire est constitué par un miroir concave comportant en son centre une ouverture circulaire dont le diamètre est au moins égal à celui d'un écran fictif interceptant le cône de lumière s'échappant latéralement de la fibre et destiné à éliminer les modes conduits et les modes de fuite.

8. Appareil selon l'une quelconque des revendications 2 à 4, caractérisé en ce que le premier dispositif optique comporte un premier miroir diviseur disposé entre la source lumineuse et une lentille convergente pour focaliser le faisceau lumineux sur la fibre, ce miroir étant agencé pour dériver une portion prédéterminée de la lumière émise par la source sur un détecteur de référence.

9. Appareil selon la revendication 8, caractérisé en ce que le premier miroir diviseur est un miroir sélectif du type miroir laser agencé pour réfléchir au moins approximativement 99 % de la lumière incidente et à transmettre environ 1 % de cette lumière.

10. Appareil selon la revendication 1, caractérisé en ce qu'il comporte un organe de visualisation, un dispositif pour injecter en extrémité ou latéralement dans la fibre optique une lumière destinée à visualiser l'extrémité mesurée de la fibre au moyen d'un système optique associé à l'organe de visualisation.

11. Appareil selon la revendication 1, caractérisé en ce que les parois latérales de la cuve sont réfléchissantes.

12. Appareil selon la revendication 1, caractérisé en ce qu'il comporte un cache disposé dans le faisceau parallèle, et conçu de telle manière que la zone correspondant à son ombre portée couvre au moins la zone définie par l'ouverture centrale du détecteur.

0111441

13. Appareil selon la revendication 12, caractérisé en ce que le cache est monté dans le premier dispositif optique.

0111441

1/3

FIG. 1

FIG. 2

FIG. 3

FIG. 6

FIG. 4

FIG. 5

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | APPLIED OPTICS, vol. 20, no. 9, 1 mai 1981, pages 1645-1651, New York, US<br>M.J. SAUNDERS: "Optical fiber profiles using the refracted near-field technique: a comparison with other methods" * Pages 1646-1647; figure 3 * | 1,2,8-10 | G 01 N 21/41 |
| | --- | | |
| X | OPTICAL QUANTUM ELECTRONICS, vol. 11, no. 2, mars 1979, pages 185-196, Chapman & Hall, GB<br>K.I. WHITE: "Practical application of the refracted near-field technique for the measurements of optical fibre refractive index profiles" * Pages 186-187; figures 1,2,5 * | 1,2 | |
| | --- | | **DOMAINES TECHNIQUES RECHERCHES (Int. Cl. ³)** |
| A | CONFERENCE EUROPEENNE SUR LES COMMUNICATIONS OPTIQUES, no. 8, 8-ECOC, session A-VI, 21-24 septembre 1982, Cannes, FR<br>W.J. STEWART et al.: "High resolutions optical fibre index profiling" * Page 194; figure 4 * | 1,5 | G 01 N   21/41<br>G 01 M   11/00<br>G 01 N   21/51<br>G 01 N   21/47 |
| | ---                    -/- | | |

Le présent rapport de recherche a été établi pour toutes les revendications

| Lieu de la recherche<br>LA HAYE | Date d'achèvement de la recherche<br>20-02-1984 | Examinateur<br>BOEHM CH.E.D. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82

## Office européen des brevets

## RAPPORT DE RECHERCHE EUROPEENNE

| DOCUMENTS CONSIDERES COMME PERTINENTS | | Page  2 |
|---|---|---|

| Catégorie | Citation du document avec indication, en cas de besoin, des parties pertinentes | Revendication concernée | CLASSEMENT DE LA DEMANDE (Int. Cl. ³) |
|---|---|---|---|
| X | APPLIED OPTICS, vol. 20, no. 19, 1st Octobre 1981, pages 3415-3422, New York, US<br>M. YOUNG: "Optical fiber index profiles by the refracted-ray method (refracted near-field scanning)" * Pages 3418-3419; figures 3-4 *<br><br>--- | 1,8,10 ,11 | |
| A | US-A-3 786 261 (L. TUCKER) * Colonnes 4-5; figure 1 *<br><br>----- | 2 | |
| | | | **DOMAINES TECHNIQUES RECHERCHES (Int. Cl. ³)** |

Le présent rapport de recherche a été établi pour toutes les revendications

| Lieu de la recherche | Date d'achèvement de la recherche | Examinateur |
|---|---|---|
| LA HAYE | 20-02-1984 | BOEHM CH.E.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82